# EUROPEAN PATENT SPECIFICATION

(11) **EP 2 824 880 B1**
(45) Date of publication and mention of the grant of the patent: **15.02.2017**
(21) Application number: 14002284.9
(22) Date of filing: 03.07.2014
(51) Int. Cl.: H04L 12/933, G06F 9/50

(54) **FLEXIBLE OFFLOAD OF PROCESSING A DATA FLOW**
FLEXIBLE ÜBERGABE DER BEARBEITUNG EINES DATENFLUSSES
DÉCHARGEMENT FLEXIBLE DU TRAITEMENT D'UN FLUX DE DONNÉES

(30) Priority: 10.07.2013 US 201361844709 P; 13.08.2013 US 201361865525 P; 05.09.2013 US 201361874259 P; 19.06.2014 US 201414308992
(43) Date of publication of application: 14.01.2015
(73) Proprietor: Brocade Communications Systems, Inc., San Jose, CA 95134 (US)
(72) Inventor: Kancherla, Mani, San Jose, CA 95134 (US)
(74) Representative: Müller-Boré & Partner Patentanwälte PartG mbB

(56) References cited:
- WO-A1-2010/129516
- US-A1- 2006 126 628
- US-A1- 2010 083 259

## Description

### BACKGROUND

In computer networking, Layer 4-7 devices (sometimes referred to as Layer 4-7 switches or application delivery controllers (ADCs)) are devices that optimize the delivery of cloud-based applications from servers to clients. For example, Layer 4-7 devices provide functions such as server load balancing, TCP connection management, traffic redirection, automated failover, data compression, network attack prevention, and more. Layer 4-7 devices may be implemented via a combination of hardware and software (e.g., a dedicated ADC), or purely via software (e.g., a virtual ADC running on a general purpose computer system).

Generally speaking, Layer 4-7 devices perform two types of processing on incoming network traffic: stateless (i.e., flow agnostic) processing and stateful (i.e., flow-aware) processing. Stateless processing treats packets discretely, such that the processing of each packet is independent of other packets. Examples of stateless processing include stateless firewall filtering, traffic shaping, and so on. On the other hand, stateful processing treats related packets (i.e., packets in the same flow) in the same way. With this type of processing, packet treatment will typically depend on characteristics established for the first packet in the flow. Examples of stateful processing include stateful server load balancing, network address translation (NAT), transaction rate limiting, and so on.

Conventional Layer 4-7 devices typically perform stateful processing in software via a general purpose processor (e.g., an x86, PowerPC, or ARM-based CPU), rather than in hardware via a specialized logic circuit (e.g., a FPGA or ASIC). In other words, for each incoming flow, all of the packets in the flow are sent to the general purpose processor for flow-aware handling. This is true even for hardware-based Layer 4-7 devices (e.g., dedicated ADCs), because stateful processing is typically more complex and also requires a significant amount of memory to maintain flow information, making it less attractive to implement in silicon.

However, the foregoing approach (where all packets in a flow are sent to the general purpose processor) is inefficient for several reasons. First, in many cases, all of the packets in a flow do not need the same level of processing; instead, some packets may require complex processing (e.g., the first and last packets), while other packets may require very little processing (e.g., the middle packets). Thus, sending all of the packets in the flow to the general purpose processor can be wasteful, since the general purpose processor will expend power and resources to examine packets that ultimately do not need much handling.

Second, for long-lived flows, such as video streams or large file downloads, there are usually a very large number of middle packets that comprise the bulk of the data being transferred. As noted above, each of these middle packets may need only a trivial amount of processing, but the sheer volume of these packets may consume the majority of the processing time of the general purpose processor. This, in turn, may significantly impair the general purpose processor's ability to carry out other assigned tasks.

Accordingly, it would be desirable to have improved techniques for performing stateful (i.e., flow-aware) processing in a Layer 4-7 device.

WO 2010/129516 A1 discloses a method for distributing flows of network traffic across a plurality of packet processing engines executing on a corresponding core of a multi-core device. The method includes receiving, by a multi-core device intermediary to clients and servers, a packet of a first flow of network traffic between a client and server. The method also includes assigning, by a flow distributor of the multi-core device, the first flow of network traffic to a first core executing a packet processing engine and distributing the packet to this core. The flow distributor may distribute packets of another or second flow of traffic between another client and server to a second core executing a second packet processing engine. When a packet for the flow of traffic assigned to the first core is received, such as a third packet, the flow distributor distributes this packet to the first core.

US 2010/083259 A1 disclosed a computer system comprising a plurality of cores that may process the tasks determined by the operating system. A network device may direct a first set of packets to a first core using a flow-spreading technique such as receive side scaling (RSS). However, the operating system may re-provision a task from the first core to a second core to balance the load, for example, on the computer system. The operating system may determine an identifier of the second core using a new data field in the socket calls to track the identifier of the second core. The operating system may provide the identifier of the second core to a network device. The network device may then direct a second set of packets to the second core using the identifier of the second core.

US 2006/126628 A1 discloses a method for assigning a flow of network packets to a thread of a multi-threaded processor core in a set of multiple multi-threaded processor cores integrated on a single die. Based on the assigning, a packet in the flow is processed by the assigned processor core thread.

Thus, according to an aspect, the problem relates to how to improve the processing of network flows.

### SUMMARY

This problem is solved by a device, a non-transitory readable medium and a method having the features disclosed in claim 1, 10 and 13, respectively. Preferred embodiments are defined in the dependent claims. Techniques for enabling flexible flow offload in a Layer 4-7 device are provided. In one embodiment, the device includes a general purpose processor for performing flow-aware processing for a network flow. The device further includes a many-core network processor in communication with the general purpose processor, and a non-transitory computer readable medium having stored thereon program code executable by the many-core network processor. When executed, the program code causes the many-core network processor to offload at
least a portion of the flow-aware processing for at least a portion of the network flow from the general purpose processor, thereby reducing the load on the general purpose processor and improving the overall performance of the device. The nature of the offloading (e.g., timing, portion of the flow offloaded, etc.) is configurable by an
application running on the general purpose processor.

The following detailed description and accompanying drawings provide a better understanding of the nature and advantages of particular embodiments.

### BRIEF DESCRIPTION OF DRAWINGS

FIG. 1 depicts a network environment according to an embodiment.
FIG. 2 depicts a Layer 4-7 device according to an embodiment.
FIG. 3 depicts another Layer 4-7 device according to an embodiment.
FIG. 4 depicts yet another Layer 4-7 device according to an embodiment.
FIG. 5 depicts a data plane software architecture according to an embodiment.
FIGS. 6A and 6B depict a flowchart for performing Layer 4 load balancing according to an embodiment.
FIG. 7 depicts a flowchart for performing Layer 4 load balancing in combination with SYN attack protection according to an embodiment.
FIGS. 8A and 8B depict a flowchart for performing Layer 7 load balancing according to an embodiment.

### DETAILED DESCRIPTION

In the following description, for purposes of explanation, numerous examples and details are set forth in order to provide an understanding of various embodiments. It will be evident, however, to one skilled in the art that certain embodiments can be practiced without some of these details, or can be practiced with modifications or equivalents thereof.

### 1. Overview

The present disclosure describes a hardware architecture and corresponding software architecture for offloading stateful (i.e., flow aware) processing from the general purpose processor of a Layer 4-7 device. At a high level, the hardware architecture can include a many-core network processor (NP) that is in communication with the general purpose processor. One example of such a many-core NP is the TILE-Gx8036 NP developed by Tilera Corporation, although any similar many-core processor may be used. The many-core NP can be programmed, via the software architecture, to perform a portion of the flow-aware tasks that were previously performed solely by the general purpose processor, thereby offloading those tasks from the general purpose processor to the many-core NP. In this way, the load on the general purpose processor can be reduced and the overall performance of the Layer 4-7 device can be improved.

To facilitate the offloading described above, the software architecture can include a flow offload engine that runs on the many-core NP. The flow offload engine can enable network applications running on the general purpose processor to flexibly control how, when, what, and for how long flow-aware tasks should be offloaded from the general purpose processor to the many-core NP. For example, in certain embodiments, the flow offload engine can enable the applications to specify that only the reverse flow in a connection should be offloaded, only certain packets in a flow (e.g., control packets or packets within a given sequence number range) should be offloaded, and more. The flow offload engine can then cause the many-core NP to carry out flow processing in accordance with those instructions, without involving the general purpose processor.

These and other features of the present invention are described in further detail in the sections that follow.

### 2. Network Environment

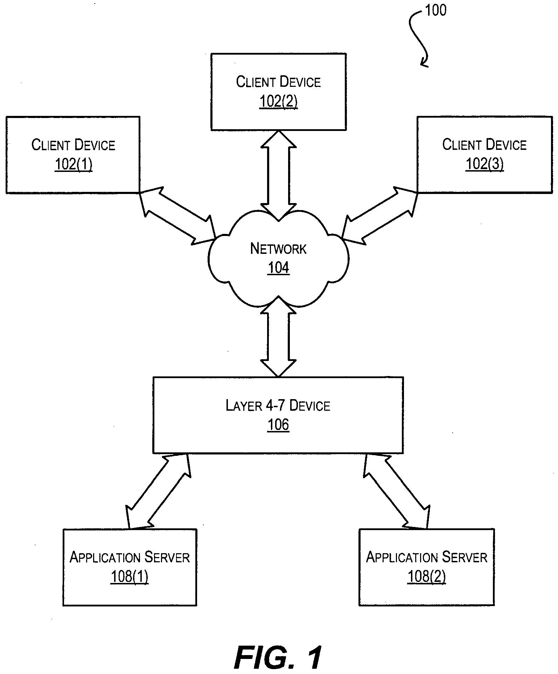

FIG. 1 is a simplified block diagram of a network environment 100 according to an embodiment. As shown, network environment 100 includes a number of client devices 102-1, 102-2, and 102-3 that are communicatively coupled with application servers 108-1 and 108-2 through a network 104 and a Layer 4-7 device 106. Although FIG. 1 depicts three client devices, two application servers, and one Layer 4-7 device, any number of these entities may be supported.

Client devices 102-1, 102-2, and 102-3 are end-user computing devices, such as a desktop computer, a laptop computer, a personal digital assistant, a smartphone, a tablet, or the like. In one embodiment, client devices 102-1, 102-2, and 102-3 can each execute (via, e.g., a standard web browser or proprietary software) a client component of a distributed software application hosted on application servers 108-1 and/or 108-2, thereby enabling users of devices 102-1, 102-2, and 102-3 to interact with the application.

Application servers 108-1 and 108-2 are computer systems (or clusters/groups of computer systems) that are configured to provide an environment in which the server component of a distributed software application can be executed. For example, application servers 108-1 and 108-2 can receive a request from client 102-1, 102-2, or 102-3 that is directed to an application hosted on the server, process the request using business logic defined for the application, and then generate information responsive to the request for transmission to the client. In embodiments where application servers 108-1 and 108-2 are configured to host one or more web applications, application servers 108-1 and 108-2 can interact with one or more web server systems (not shown). These web server systems can handle the web-specific tasks of receiving Hypertext Transfer Protocol (HTTP) requests from clients 102-1, 102-2, and 102-3 and servicing those requests by returning HTTP responses.

Layer 4-7 device 106 is a computing device that is configured to perform various functions to enhance the delivery of applications that are hosted on application servers 108-1 and 108-2 and consumed by client devices 102-1, 102-2, and 102-3. For instance, Layer 4-7 device 106 can intercept and process packets transmitted between the application servers and the client devices to provide, e.g., Layer 4-7 traffic redirection, server load balancing, automated failover, TCP connection multiplexing, server offload functions (e.g., SSL acceleration and TCP connection management), data compression, network address translation, and more. Layer 4-7 device 106 can also provide integrated Layer 2/3 functionality in addition to Layer 4 through 7 features.

In one embodiment, Layer 4-7 device 106 can be a dedicated network device, such as a hardware-based ADC. In other embodiments, Layer 4-7 device 106 can be a general purpose computer system that is configured to carry out its Layer 4-7 functions in software. In these embodiments, Layer 4-7 device 106 can be, e.g., a server in a data center that hosts a virtual ADC (in addition to other virtual devices/machines).

It should be appreciated that network environment 100 is illustrative and is not intended to limit embodiments of the present invention. For example, the various entities depicted in network environment 100 can have other capabilities or include other components that are not specifically described. One of ordinary skill in the art will recognize many variations, modifications, and alternatives.

### 3. Hardware Architecture of Layer 4-7 Device

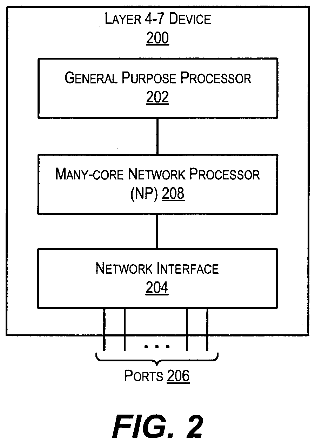

FIG. 2 is a simplified block diagram of a Layer 4-7 device 200 according to an embodiment. In various embodiments, Layer 4-7 device 200 can be used to implement Layer 4-7 device 106 of FIG. 1.

As shown, Layer 4-7 device 200 includes a general purpose processor 202 and a network interface 204. General purpose processor 202 can be, e.g., an x86, PowerPC, or ARM-based CPU that operates under the control of software stored in an associated memory (not shown). Network interface 204 can comprise any combination of hardware and/or software components that enable Layer 4-7 device 200 to transmit and receive data packets via one or more ports 206. In one embodiment, network interface 204 can be an Ethernet-based interface.

As noted in the Background section, when a conventional Layer 4-7 device performs stateful processing of incoming data traffic, all of the data packets for a given flow are forwarded to the device's general purpose processor. The general purpose processor executes any flow-aware tasks needed for the packets and subsequently switches out (i.e., forwards) the packets to their intended destination(s). The problem with this conventional approach is that many packets in a flow may not require much stateful processing, and thus it is inefficient for the general purpose processor to examine every single packet.

To address the foregoing and other similar issues, Layer 4-7 device 200 can implement a novel hardware architecture that includes a many-core NP 208 as shown in FIG. 2. As used herein, a "many-core NP" is a processor that is software programmable like a general purpose processor, but comprises a large number (e.g., tens, hundreds, or more) of lightweight processing cores, rather than the relatively few, heavyweight cores found in typical general purpose processors. A many-core NP can also include dedicated hardware blocks for accelerating certain functions (e.g., compression, encryption, etc.). Examples of many-core NPs include the TILE-Gx8036 processor developed by Tilera Corporation, the Octeon processor developed by Cavium, Inc., and the XLP multicore processor developed by Broadcom Corporation.

Many-core NP 208 can act as a communication bridge between network interface 204 and general purpose processor 202. For example, many-core NP 208 can be programmed to perform packet buffer management with respect to data packets received via network interface 204 and redirected to general purpose processor 202. Further, in situations where network interface 204 and general purpose processor 202 support different physical interfaces (e.g., XAUI and PCI-e respectively), many-core NP 208 can include hardware to bridge those two physical interfaces.

More importantly, many-core NP 208 can take over (i.e., offload) at least a portion of the Layer 4-7 packet processing previously handled by general purpose processor 202. For example, many-core NP 208 can offload stateless processing tasks from general purpose processor 202, such as Denial of Service (DoS) protection and stateless firewall filtering. In addition, many-core NP 208 can offload stateful, or flow-aware, processing tasks from general purpose processor 202, such as Layer 4 or 7 load balancing. In this latter case, many-core NP 208 can execute a flow offload engine (detailed in Section 4 below) that enables applications running on general purpose processor 202 to flexibly control the nature of the offloading (e.g., which tasks are offloaded, which flows or portions thereof are offloaded, etc.). With this flow offload capability, many-core NP 208 can significantly reduce the flow processing load on general purpose processor 202, thereby freeing up general purpose processor 202 to handle other tasks or implement new features/capabilities.

It should be appreciated that FIG. 2 depicts a highly simplified representation of Layer 4-7 device 200 and that various modifications or alternative representations are possible. For instance, although only a single general purpose processor and a single many-core NP are shown, any number of these processors may be supported.

Further, in certain embodiments many-core NP 208 may be replaced with a hardware-based logic circuit, such as an FGPA or ASIC. In these embodiments, the hardware logic circuit can be designed/configured to perform the flow offload functions attributed to many-core NP 208. However, it is generally preferable to use a many-core NP for several reasons. First, the number of flows that an FPGA or ASIC can handle for a given size/cost/power envelope is smaller than a many-core NP. Thus, these hardware logic circuits do not scale well as the amount of data traffic increases, which is a significant disadvantage in high volume (e.g., enterprise or service provider) networks. Second, due to their hardware-based nature, FPGAs and ASICs are inherently difficult/costly to design and maintain, particularly when implementing complex logic such as flow-aware processing logic. This means that for a given cost, the many-core NP design of FIG. 2 enables network vendors to provide a more flexible, scalable, and cost-efficient Layer 4-7 device to customers than an FPGA/ASIC-based design.

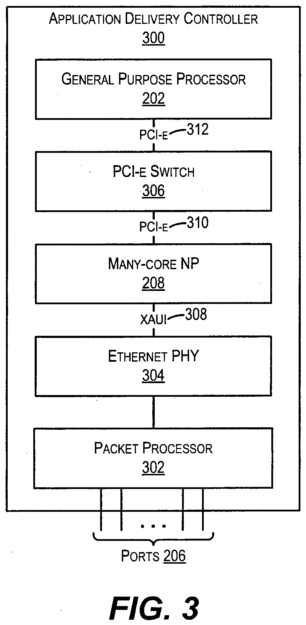

Yet further, depending on the nature of Layer 4-7 device 200, the device may include additional components and/or sub-components that are not shown in FIG. 2. By way of example, FIG. 3 depicts a version of Layer 4-7 device 200 where the device is implemented as a dedicated ADC 300. ADC 300 includes the same general purpose processor 202, many-core NP 208, and ports 206 as Layer 4-7 device 200 of FIG. 2. However, ADC 300 also includes a packet processor 302 and Ethernet PHY 304 (which collectively represent network interface 204), as well as a PCI-e switch 306. Ethernet PHY 304 is communicatively coupled to many-core NP 208 via an Ethernet XAUI interface 308, while PCI-e switch 306 is communicatively coupled with general purpose processor 202 and many-core NP 208 and via PCI-e interfaces 310 and 312 respectively.

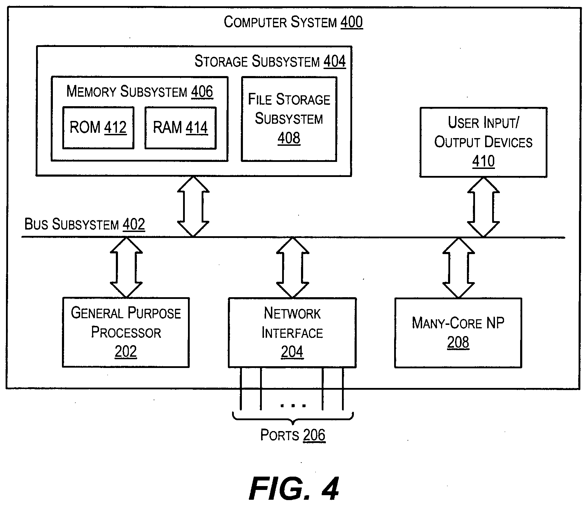

As another example, FIG. 4 depicts a version of Layer 4-7 device 200 where the device is implemented as a general purpose computer system 400. Computer system 400 includes the same general purpose processor 202, network interface 204, ports 206, and many-core NP 208 as Layer 4-7 device 200 of FIG. 2. However, general purpose processor 202, network interface 204, and many-core NP 208 of computer system 400 all communicate via a common bus subsystem 402 (e.g., PCI-e). In this embodiment, many-core NP 208 may be located on, e.g., a PCI-e accelerator card that is insertable into and removable from the chassis of computer system 400. Computer system 400 also includes various components that are typically found in a conventional computer system, such as a storage subsystem 404 (comprising a memory subsystem 406 and a file storage subsystem 408) and user input/output devices 410. Subsystems 406 and 408 can include computer readable media (e.g., RAM 412, ROM 414, magnetic/flash/optical disks, etc.) that store program code and/or data usable by embodiments of the present invention.

### 4. Software Architecture of Layer 4-7 Device

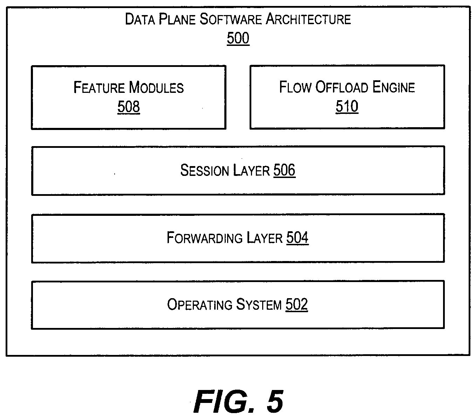

As discussed above, to facilitate the offloading of flow-aware processing from general purpose processor 202 to many-core NP 208, Layer 4-7 device 200 can implement a software architecture that includes a novel flow offload engine. FIG. 5 is a simplified block diagram of such a software architecture 500 according to an embodiment. Software architecture 500 is considered a "data plane" software architecture because it runs on the data plane components of Layer 4-7 device 200 (e.g., many-core NP 208 and/or general purpose processor 202).

As shown, software architecture 500 comprises an operating system 502, a forwarding layer 504, and a session layer 506. Operating system 502 can be any operating system known in the art, such as Linux, variants of Unix, etc. In a particular embodiment, operating system 502 is a multi-threaded operating system and thus can take advantage of the multiple processing cores in many-core NP 208. Forwarding layer 502 is responsible for performing low-level packet forwarding operations, such as packet sanity checking and Layer 2/3 forwarding. Session layer 504 is responsible for session management, such as creating, deleting, and aging sessions.

In addition to the foregoing components, software architecture 500 includes a number of feature modules 508 and a flow offload engine 510. Features modules 508 can correspond to various stateless and stateful packet processing features that are supported by many-core NP 208 and/or general purpose processor 202, such as L4 load balancing, L7 load balancing, SYN attack protection, caching, compression, scripting, etc. Flow offload engine 510, which runs on many-core NP 208, can include logic for invoking one or more of feature modules 508 in order to perform flow-aware tasks on certain incoming data packets, without having to send those packets to general purpose processor 202.

Significantly, flow offload engine 510 is not fixed in nature; in other words, the engine is not limited to invoking the same flow processing with respect to every incoming flow. Instead, flow offload engine 510 can be dynamically configured/controlled (by, e.g., network applications running on general purpose processor 202) to perform different types of flow processing with respect to different flows or portions thereof. In this way, flow offload engine 510 can fully leverage the architectural advantages provided by many-core NP 208 to improve the performance of Layer 4-7 device 200.

Merely by way of example, flow offload engine 510 can be configured to:
- Offload only the middle packets in a flow (and/or certain control packets in the flow, such as TCP SYN-ACK, the first FIN, etc.)
- Begin/terminate flow offloading for a flow based on specified criteria (e.g., upon receipt of a specified control packet, after receiving X amount of data, etc.)
- Offload the entirety of a flow, only a forward flow (i.e., client to server), only a reverse flow (i.e., server to client), or only a certain range of packets within a flow (e.g., packets within a specified sequence number or data range)
- Offload only certain flow-aware tasks, or combinations of tasks (e.g., L7 load balancing for HTTP responses, L4 load balancing and SYN attack prevention, etc.)
- Enable/disable certain flow offload tasks for certain applications/services (HTTP web service, mail service, etc.)

To further clarify the operation and configurability of flow offload engine 510, the following sub-sections describe a number of exemplary flow offload scenarios and how the scenarios may be handled by many-core NP 208 and general purpose processor 202 of Layer 4-7 device 200. In these scenarios, it is assumed that the steps attributed to many-core NP 208 are performed via flow offload engine 510.

### 4.1 Layer 4 load balancing

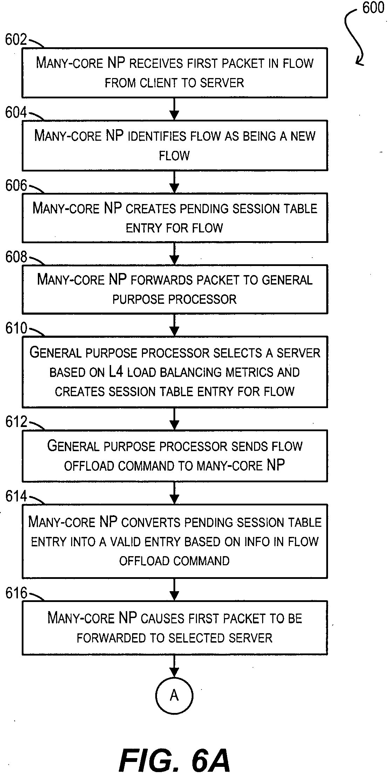

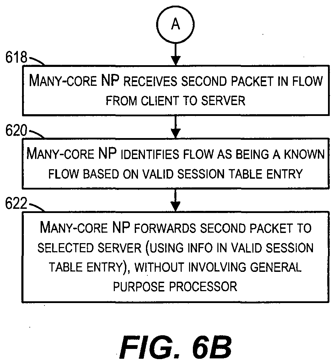

FIGS. 6A and 6B depict a flowchart 600 of an exemplary Layer 4 load balancing scenario according to an embodiment. Starting with FIG. 6A, at block 602, many-core NP 208 receives a first packet in a flow from a client to server (e.g., a TCP SYN packet).

At block 604, many-core NP 208 can identify the flow as being a new flow (i.e., a flow that has not been previously seen by many-core NP 208). In response, many-core NP 208 can create a pending session table entry for the flow in a memory accessible to the NP and can forward the packet to general purpose processor 202 (blocks 606 and 608).

At block 610, general purpose processor 202, can select an application server for handling the flow based on Layer 4 load balancing metrics (e.g., number of connections per server, etc.) and can create a session table entry for the flow in a memory accessible to the processor. This session table entry can be separate from the pending session table entry created by many-core NP 208 at block 606.

General purpose processor 202 can then determine that the flow can be offloaded at this point to many-core NP 208 and can therefore send a flow offload command to many-core NP 208 (block 612). In various embodiments, the flow offload command can include, e.g., information identifying the flow to be offloaded, an indication of the task to be offloaded (e.g., server load balancing), and an indication of the server selected.

Upon receiving the flow offload command, many-core NP 208 can convert the pending session table entry into a valid entry based on the information included in the flow offload command (block 614). In this manner, many-core NP 208 can be prepared to handle further data packets received in the same flow. Many-core NP 208 subsequently forwards the first packet
to the selected application server (block 61.6).

Turning now to FIG. 6B, at block 618, many-core NP 208 can receive a second packet in the same flow as FIG. 6A (i.e., the client-to-server flow). In response, many-core NP 208 can identify the flow as being a known flow based on the valid session table entry created/converted at block 614 (block 620). Finally, at block 622, many-core NP 208 can directly forward the second packet to the selected application server based on the valid session table entry, without involving the general purpose processor.

### 4.2 Layer 4 load balancing + SYN attack protection

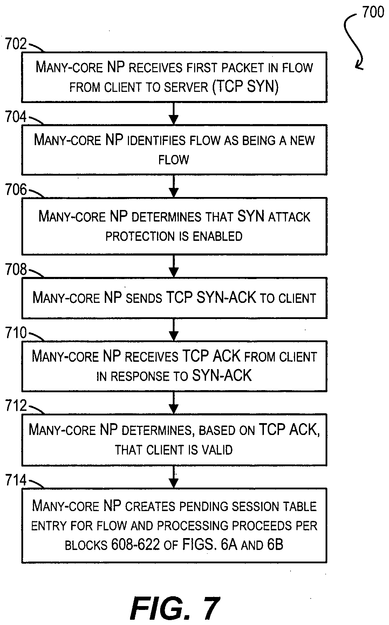

FIG. 7 depicts a flowchart 700 of an exemplary Layer 4 load balancing + SYN attack protection scenario according to an embodiment. At block 702, many-core NP 208 receives a
first packet in a flow from a client to server (e.g., a TCP SYN packet).

At block 704, many-core NP 208 can identify the flow as being a new flow (i.e., a flow that has not been previously seen by many-core NP 208). Further, at block 706, many-core NP 208 can determine that SYN attack protection has been enabled.

At block 708, many-core NP 208 can send a TCP SYN-ACK to the client (without involving the general purpose processor or the application server(s)). Many-core NP 208 can then receive a TCP ACK from the client in response to the SYN-ACK (block 710).

Upon receiving the TCK ACK, many-core NP 208 can determine that the client is a valid (i.e., non-malicious) client (block 712). Thus, many-core NP 208 can create a pending session table entry for the flow and forward the ACK packet to general purpose processor 202 (block 714). The processing of flowchart 700 can then proceed per blocks 208-622 of FIGS. 6A and 6B in order to carry out Layer 4 load balancing.

### 4.3 Layer 7 load balancing (response body offload)

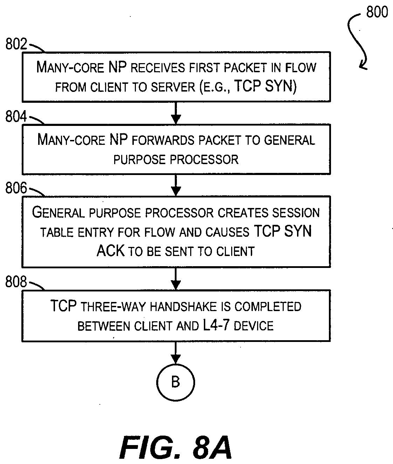

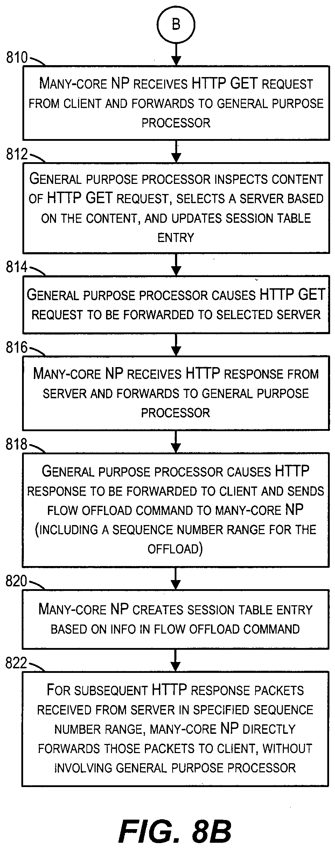

FIGS. 8A and 8B depict a flowchart 800 of an exemplary Layer 7 load balancing scenario according to an embodiment. In particular, flowchart 800 corresponds to a scenario where the body portion of an HTTP response is offloaded from general purpose processor 202 to many-core NP 208.

At blocks 802 and 804, many-core NP 208 receives a first packet in a flow from a
client to server (e.g., a TCP SYN packet) and can forward the packet to general purpose processor 202.

At block 806, general purpose processor 202 can create a session table entry for the flow and can cause a TCP SYN-ACK to be returned to the client. Then, at block 808, many-core NP 208/general purpose processor 202 can receive a TCP ACK packet from the client and the TCP 3-way handshake can be completed.

Turning now to FIG. 8B, at block 810, many-core NP 208 can receive an HTTP GET request from the client and forward the request to general purpose processor 202. In response, general purpose processor 202 can inspect the content of the HTTP GET request, select an application server based on the inspected content, and can update its session table entry with the selected server information (block 812). General purpose processor 202 can then cause the HTTP GET request to be forwarded to the selected server (block 814).

After some period of time, many-core NP 208 can receive an HTTP response from the application server and can forward the response to general purpose processor 202 (block 816). Upon receiving the response, general purpose processor 202 can cause the HTTP response to be forwarded to the client. In addition, general purpose processor 202 can send a flow offload command to many-core NP 208 that indicates the body of the HTTP response should be handled by many-core NP 208 (block 818). In a particular embodiment, the flow offload command can identify a range of TCP sequence numbers for the offload.

At block 820, many-core NP 208 can create a local session table entry based on the information in the flow offload command. Finally, for subsequent server-to-client packets (i.e., HTTP response body packets) that are within the specified sequence number range, many-core NP 208 can directly forward those packets to the client based on the session table entry, without involving general purpose processor 202 (block 822). Note that once the sequence number range is exhausted, many-core NP 208 can remove the session table entry created at block 820, thereby causing subsequent HTTP response headers to be sent to general purpose processor 202 for regular handling.

It should be appreciated that the scenarios shown in FIGS. 6A, 6B, 7, 8A, and 8B are illustrative and meant to show the flexibility that can be achieved via flow offload engine 510 of FIG. 5. Various modifications and variations to these scenarios are possible. For example, in the L4 load balancing scenario of FIGS. 6A and 6B, many-core NP 208 may not create a pending session table entry when a new flow is received; instead, many-core NP 208 may directly create a new valid entry when instructed by general purpose processor 202. Alternatively, many-core NP 208 may only create pending session table entries up to a certain threshold (e.g., 50% usage of the session table), and then after that no longer create pending entries. This is to avoid completely filling up the session table with bogus entries when the Layer 4-7 device is under attack. In either of these cases, when general purpose processor 202 instructs many-core NP 208 to turn on offload for a flow, general purpose processor 202 may need to send some additional information (that it would not have if the pending entry existed) so that many-core NP 208 can correctly create the valid session table entry. This is less efficient than creating the pending entry in the first place, but is considered an acceptable tradeoff to avoid filling up the session table when under attack.

As another example, in certain embodiments, many-core NP 208 may be programmed to offload certain tasks that are attributed to general purpose processor 202 in FIGS. 6A, 6B, 7, 8A, and 8B (such as first packet processing). This may require additional state synchronization between NP 208 and general purpose processor 202.

As yet another example, many-core NP 208 may be programmed to handle certain combinations of flow-aware tasks or offload certain portions of flows that are not specifically described. One of ordinary skill in the art will recognize many variations, modifications, and alternatives.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. For example, although certain embodiments have been described with respect to particular process flows and steps, it should be apparent to those skilled in the art that the scope of the present invention is not strictly limited to the described flows and steps. Steps described as sequential may be executed in parallel, order of steps may be varied, and steps may be modified, combined, added, or omitted. As another example, although certain embodiments have been described using a particular combination of hardware and software, it should be recognized that other combinations of hardware and software are possible, and that specific operations described as being implemented in software can also be implemented in hardware and vice versa.

The specification and drawings are, accordingly, to be regarded in an illustrative rather than restrictive sense. Other arrangements, embodiments, implementations and equivalents will be evident to those skilled in the art and may be employed without departing from the scope of the invention as set forth in the following claims.

## Claims

1. A device (200) comprising:
a general purpose processor (202);
a many-core network processor (208) in communication with the general purpose processor (202); and
a non-transitory computer readable medium having stored thereon program code that, when executed by the many-core network processor (208), causes the many-core network processor (208) to:
receive a first packet in a network flow;
forward the first packet to the general purpose processor;
in response to forwarding the first packet, receive information from the general purpose processor that includes an indication to begin offloading flow-aware processing of the network flow from the general purpose processor to the many-core network processor; and
in response to receiving the information, perform local flow-aware processing of one or more second packets in the network flow based on the received information without forwarding the one or more second packets to the general purpose processor.

2. The device (200) of claim 1 wherein the program code further includes code that causes the many-core network processor (208) to:
create, based on the information received from the general purpose processor, a session table entry for the network flow in a memory accessible to the many-core network processor (208).

3. The device (200) of claim 2 wherein the many-core network processor performs the local flow-aware processing of the one or more second packets based on the session table entry.

4. The device (202) of claim 3 wherein the session table entry identifies a destination for the one or more second packets, and wherein performing local flow-aware processing of the one or more second packets comprises forwarding the one ore more second packets to an egress port of the device based on the destination.

5. The device (200) of any one of claims 2 to 4 wherein the information received from the general purpose processor (202) further includes an indication of the portion of the network flow to be offloaded.

6. The device (200) of claim 5 wherein the indication of the portion of the network flow to be offloaded comprises a range of Transmission Control Protocol, TCP, sequence numbers and/or wherein the indication of the portion of the network flow to be offloaded comprises one or more control packet identifiers.

7. The device (200) of any one of claims 2 to 6 wherein the information received from the general purpose processor (202) further includes state information that enables the offloading of the portion of the network flow and/or wherein the information received from the general purpose processor (202) further includes an indication of a task that should be offloaded.

8. The device (200) of any one of claims 1 to 7 wherein the device is a dedicated network device, preferably further comprising a Layer 2/3 packet processor in communication with the many-core network processor, wherein more preferably the many-core network processor (208) is communicatively coupled with the general purpose processor (202) via a first interface, and wherein the many-core network processor (208) is communicatively coupled with the Layer 2/3 packet processor via a second interface that is different than the first interface, wherein furthermore preferably the first interface is PCI-e and wherein the second interface is XAUI.

9. The device (200) of any one of claims 1 to 8 wherein the device is a general purpose computer device.

10. A non-transitory computer readable medium having stored thereon program code executable by a many-core network processor (208), wherein the many-core network processor (208) is in communication with a general purpose processor (202), and wherein the program code comprises:
code that causes the many-core network processor (208) to receive a first packet in a network flow;
code that causes the many-core network processor to forward the first packet to the general purpose processor;
code that causes the many-core network processor to, in response to forwarding the first packet, receive information from the general purpose processor that includes an indication to begin offloading flow-aware processing of the network flow from the general purpose processor to the many-core network processor; and
code that causes the many-core network processor to, in response to receiving the information, perform local flow-aware processing of one or more second packets in the network flow based on the received information without forwarding the one or more second packets to the general
purpose processor.

11. The non-transitory computer readable medium of claim 10 wherein the progam code further comprises:
code that causes the many-core network processor (208) to create, based on the information received from the general purpose processor, a session table entry for the network flow in an accessible memory.

12. The non-transitory computer readable medium of claim 11 wherein the many-core network processor performs (208) the local flow-aware processing of the one or more second packets based on the session table entry.

13. A method executable by a many-core network processor (208), the many-core network processor (208) being in communication with a general purpose processor (202), the method comprising:
receiving a first packet in a network flow;
forwarding the first packet to the general purpose processor;
in response to forwarding the first packet, receiving information from the general purpose processor that includes an indication to begin offloading flow-aware processing of the network flow from the general purpose processor to the many-core network processor; and
in response to receiving the information, performing local flow-aware processing of one or more second packets in the network flow based on the received information without forwarding the one or more second packets to the general purpose processor.

14. The method of claim 13 further comprising:
creating, based on the information received from the general purpose processor, a session table entry for the network flow in a memory accessible to the many-core network processor (208).

15. The method of claim 14 wherein the many-core network processor performs the local flow-aware processing of the one or more second packets based on the session table entry.

## Patentansprüche

1. Eine Vorrichtung (200), die Folgendes umfasst:
einen Allzweck-Prozessor (202);
einen mehrkernigen Netzwerkprozessor (208), der mit dem Allzweck-Prozessor (202) in Kommunikation steht; und
ein nicht-flüchtiges computerlesbares Medium, auf dem ein Programmcode gespeichert ist, der, wenn er vom mehrkernigen Netzwerkprozessor (208) ausgeführt wird, den mehrkernigen Netzwerkprozessor (208) dazu bringt, Folgendes zu bewerkstelligen:
empfangen eines ersten Pakets in einem Netzfluss;
weiterleiten des ersten Pakets an den Allzweck-Prozessor;
als Antwort auf das Weiterleiten des ersten Pakets, empfangen von Information vom Allzweck-Prozessor, die eine Angabe beinhaltet, dass mit der Übergabe der flussbewussten (*flow-aware*) Verarbeitung des Netzflusses vom Allzweck-Prozessor zum mehrkernigen Netzwerkprozessor begonnen werden kann; und
als Antwort auf den Empfang der Information, durchführen einer lokalen flussbewussten Verarbeitung eines oder mehrerer zweiter Pakete im Netzfluss basierend auf der empfangenen Information, ohne das eine oder die mehreren zweiten Pakete an den Allzweck-Prozessor weiterzuleiten.

2. Die Vorrichtung (200) nach Anspruch 1, wobei der Programmcode des Weiteren einen Code beinhaltet, der den mehrkernigen Netzwerkprozessor (208) dazu bringt, Folgendes zu bewerkstelligen:
erzeugen, aufgrund der vom Allzweck-Prozessor erhaltenen Information, eines Session-Tabellen-Eintrags für den Netzfluss in einem Speicher, der für den mehrkernigen Netzwerkprozessor (208) zugänglich ist.

3. Die Vorrichtung (200) nach Anspruch 2, wobei der mehrkernige Netzwerkprozessor die lokale flussbewusste Verarbeitung des einen oder der mehreren zweiten Pakete auf der Grundlage des Session-Tabellen-Eintrags durchführt.

4. Die Vorrichtung (200) nach Anspruch 3, wobei der Session-Tabellen-Eintrag einen Zielort für das eine oder die mehreren zweiten Pakete identifiziert, und wobei die Durchführung der lokalen flussbewussten Verarbeitung des einen oder der mehreren zweiten Pakete das Weiterleiten des einen oder der mehreren zweiten Pakete an einen Ausgangsanschluss (*egress port*) der Vorrichtung umfasst, basierend auf dem Zielort.

5. Die Vorrichtung (200), nach irgendeinem der Ansprüche 2 bis 4, wobei die vom Allzweck-Prozessor (202) empfangene Information des Weiteren eine Angabe zum übergebenden Netzfluss-Abschnitts beinhaltet.

6. Die Vorrichtung (200) nach Anspruch 5, wobei die Angabe zum übergebenden Netzfluss-Abschnitts einen Bereich von TCP- (*Transmission Control Protocol*) - Sequenzzahlen umfasst und/oder wobei die Angabe zum übergebenden Netzfluss-Abschnitts einen oder mehrere Kontrollpaket-Identifikatoren umfasst.

7. Die Vorrichtung (200), nach irgendeinem der Ansprüche 2 bis 6, wobei die vom Allzweck-Prozessor (202) empfangene Information des Weiteren Zustandsinformation beinhaltet, die die Übergabe des Netzfluss-Abschnitts ermöglicht und/oder wobei die vom Allzweck-Prozessor (202) empfangene Information des Weiteren eine Angabe zu einer Aufgabe beinhaltet, die übergeben werden sollte.

8. Die Vorrichtung (200), nach irgendeinem der Ansprüche 1 bis 7, wobei die Vorrichtung eine dedizierte Netzwerkvorrichtung ist, die des Weiteren vorzugsweise einen Schicht 2/3 Paketprozessor umfasst, der mit dem mehrkernigen Netzwerkprozessor in Kommunikation steht, wobei besonders bevorzugt der mehrkernige Netzwerkprozessor (208) kommunikationsmäßig über eine erste Schnittstelle mit dem Allzweck-Prozessor (202) gekoppelt ist, und wobei der mehrkernige Netzwerkprozessor (208) mit dem Schicht 2/3 Paketprozessor kommunikationsmäßig gekoppelt ist über eine zweite Schnittstelle, die sich von der ersten Schnittstelle unterscheidet, wobei noch weiter bevorzugt die erste Schnittstelle eine PCI-e-Schnittstelle ist und wobei die zweite Schnittstelle eine XAUI-Schnittstelle ist.

9. Die Vorrichtung (200), nach irgendeinem der Ansprüche 1 bis 8, wobei die Vorrichtung eine Allzweck-Rechenvorrichtung ist.

10. Ein nicht-flüchtiges computerlesbares Medium, auf dem ein Programmcode gespeichert ist, der von einem mehrkernigen Netzwerkprozessor (208) ausführbar ist, wobei der mehrkernige Netzwerkprozessor (208) mit einem Allzweck-Prozessor (202) in Kommunikation steht und wobei der Programmcode Folgendes umfasst:
einen Code, der den mehrkernigen Netzwerkprozessor (208) dazu bringt, ein erstes Paket in einem Netzfluss zu empfangen;
einen Code, der den mehrkernigen Netzwerkprozessor dazu bringt, das erste Paket an den Allzweck-Prozessor weiterzuleiten;
einen Code, der den mehrkernigen Netzwerkprozessor dazu bringt, als Antwort auf das Weiterleiten des ersten Pakets, eine Information vom Allzweck-Prozessor zu empfangen, die eine Angabe beinhaltet, dass mit der Übergabe der flussbewussten (*flow-aware*) Verarbeitung des Netzflusses vom Allzweck-Prozessor zum mehrkernigen Netzwerkprozessor begonnen werden kann; und
einen Code, der den mehrkernigen Netzwerkprozessor dazu bringt, als Antwort auf den Empfang der Information, einer lokalen flussbewussten Verarbeitung eines oder mehrerer zweiter Pakete im Netzfluss durchzuführen, basierend auf der empfangenen Information, ohne das eine oder die mehreren zweiten Pakete an den Allzweck-Prozessor weiterzuleiten.

11. Das nicht-flüchtige computerlesbare Medium nach Anspruch 10, wobei der Programmcode des Weiteren Folgendes umfasst:
einen Code, der den mehrkernigen Netzwerkprozessor (208) dazu bringt, aufgrund der vom Allzweck-Prozessor erhaltenen Information, eines Session-Tabellen-Eintrags für den Netzfluss in einem zugänglichen Speicher zu erzeugen.

12. Das nicht-flüchtige computerlesbare Medium nach Anspruch 11, wobei der mehrkernige Netzwerkprozessor (208) die lokale flussbewusste Verarbeitung des einen oder der mehreren zweiten Pakete auf der Grundlage des Session-Tabellen-Eintrags durchführt.

13. Ein Verfahren das von einem mehrkernigen Netzwerkprozessor (208) ausführbar ist, wobei der mehrkernige Netzwerkprozessor (208) mit einem Allzweck-Prozessor (202) in Kommunikation steht und wobei das Verfahren Folgendes umfasst:
empfangen eines ersten Pakets in einem Netzfluss;
weiterleiten des ersten Pakets an den Allzweck-Prozessor;
als Antwort auf das Weiterleiten des ersten Pakets, empfangen von Information vom Allzweck-Prozessor, die eine Angabe beinhaltet, dass mit der Übergabe der flussbewussten (*flow-aware*) Verarbeitung des Netzflusses vom Allzweck-Prozessor zum mehrkernigen Netzwerkprozessor begonnen werden kann; und
als Antwort auf den Empfang der Information, durchführen einer lokalen flussbewussten Verarbeitung eines oder mehrerer zweiter Pakete im Netzfluss basierend auf der empfangenen Information, ohne das eine oder die mehreren zweiten Pakete an den Allzweck-Prozessor weiterzuleiten.

14. Das Verfahren nach Anspruch 13, das des Weiteren Folgendes umfasst:
erzeugen, aufgrund der vom Allzweck-Prozessor erhaltenen Information, eines Session-Tabellen-Eintrags für den Netzfluss in einem Speicher, der für den mehrkernigen Netzwerkprozessor (208) zugänglich ist.

15. Das Verfahren nach Anspruch 14, wobei der mehrkernige Netzwerkprozessor die lokale flussbewusste Verarbeitung des einen oder der mehreren zweiten Pakete auf der Grundlage des Session-Tabellen-Eintrags durchführt.

## Revendications

1. Un dispositif (200), comprenant:
un processeur polyvalent (202) ;
un processeur de réseau multicoeur (208) en communication avec le processeur polyvalent (202) ; et
un support non transitoire lisible par ordinateur sur lequel est stocké un code de programme, lequel, quand il est exécuté par le processeur de réseau multicoeur (208), amène le processeur de réseau multicoeur (208) à :
recevoir un premier paquet dans un flux de réseau ;
acheminer le premier paquet au processeur polyvalent ;
en réponse à l'acheminement du premier paquet, recevoir une information de la part du processeur polyvalent incluant un signalement indiquant le commencement du déchargement ou encore transfert du traitement sensible au flux du processeur polyvalent au processeur de réseau multicoeur ; et
en réponse à la réception de l'information, effectuer un traitement local sensible au flux d'un ou de plusieurs deuxièmes paquets dans le flux de réseau basé sur l'information reçue sans acheminer le ou les deuxièmes paquets au processeur polyvalent.

2. Le dispositif (200) d'après la revendication 1, sachant que le code de programme inclut en outre un code qui amène le processeur de réseau multicoeur (208) à :
créer, en se basant sur l'information reçue de la part du processeur polyvalent, une entrée de table de session pour le flux de réseau dans une mémoire accessible au processeur de réseau multicoeur (208).

3. Le dispositif (200) d'après la revendication 2, sachant que le processeur de réseau multicoeur effectue le traitement local sensible au flux d'un ou de plusieurs deuxièmes paquets en se basant sur l'entrée de table de session.

4. Le dispositif (200) d'après la revendication 3, sachant que l'entrée de table de session identifie une destination pour le ou les deuxièmes paquets, et sachant que le fait d'effectuer le traitement local sensible au flux d'un ou de plusieurs deuxièmes paquets comprend le fait d'acheminer le ou les deuxièmes paquets à un port de sortie du dispositif en se basant sur la destination.

5. Le dispositif (200) d'après une quelconque des revendications de 2 à 4, sachant que l'information reçue de la part du processeur polyvalent (202) inclut en outre une indication de la portion du flux de réseau qui est transférer.

6. Le dispositif (200) d'après la revendication 5, sachant que l'indication de la portion du flux de réseau qui est transférer comprend une plage de numéros de séquence TCP (*Transmission Control Protocol*) et/ou sachant que l'indication de la portion du flux de réseau qui est transférer comprend un ou plusieurs identificateurs de paquets de contrôle.

7. Le dispositif (200) d'après une quelconque des revendications de 2 à 6, sachant que l'information reçue de la part du processeur polyvalent (202) inclut en outre une information d'état autorisant le transfert de la portion du flux de réseau et/ou sachant que l'information reçue de la part du processeur polyvalent (202) inclut en outre une indication d'une tâche qui devrait être transférée.

8. Le dispositif (200) d'après une quelconque des revendications de 1 à 7, sachant que le dispositif est un dispositif de réseau dédié, de préférence comprenant en outre un processeur de paquets à couche 2/3 en communication avec le processeur de réseau multicoeur, sachant que de manière plus préférée le processeur de réseau multicoeur (208) est couplé de manière communicative avec le processeur polyvalent (202) via une première interface, et sachant que le processeur de réseau muiticoeur (208) est couplé de manière communicative avec le processeur de paquets à couche 2/3 via une deuxième interface qui est différente de la première interface, sachant que de même de manière plus préférée la première interface est à PCI-e et sachant que la deuxième interface est à XAUI.

9. Le dispositif (200) d'après une quelconque des revendications de 1 à 8, sachant que le dispositif est un dispositif informatique polyvalent.

10. Un support non transitoire lisible par ordinateur sur lequel est stocké un code de programme pouvant être exécuté par un processeur de réseau multicoeur (208), sachant que le processeur de réseau multicoeur (208) est en communication avec un processeur polyvalent (202), et sachant que le code de programme comprend :
un code qui amène le processeur de réseau multicoeur (208) à recevoir un premier paquet dans un flux de réseau ;
un code qui amène le processeur de réseau multicoeur à acheminer le premier paquet au processeur polyvalent ;
un code qui amène le processeur de réseau multicoeur à recevoir, en réponse à l'acheminement du premier paquet, une information de la part du processeur polyvalent incluant un signalement indiquant le commencement du déchargement ou encore transfert du traitement sensible au flux de réseau du processeur polyvalent au processeur de réseau multicoeur ; et
un code qui amène le processeur de réseau multicoeur à effectuer en réponse à la réception de l'information, un traitement local sensible au flux d'un ou de plusieurs deuxièmes paquets dans le flux de réseau basé sur l'information reçue sans acheminer le ou les deuxièmes paquets au processeur polyvalent.

11. Le support non transitoire lisible par ordinateur d'après la revendication 10, sachant que le code de programme comprend en outre :
un code qui amène le processeur de réseau multicoeur (208) à créer, en se basant sur l'information reçue de la part du processeur polyvalent, une entrée de table de session pour le flux de réseau dans une mémoire accessible.

12. Le support non transitoire lisible par ordinateur d'après la revendication 11, sachant que le processeur de réseau multicoeur (208) effectue le traitement local sensible au flux d'un ou de plusieurs deuxièmes paquets en se basant sur l'entrée de table de session.

13. Un procédé pouvant être exécuté par un processeur de réseau multicoeur (208), le processeur de réseau mutticoeur (208) étant en communication avec un processeur polyvalent (202), le procédé comprenant le fait de :
recevoir un premier paquet dans un flux de réseau ;
acheminer le premier paquet au processeur polyvalent ;
en réponse à l'acheminement du premier paquet, recevoir une information de la part du processeur polyvalent incluant un signalement indiquant le commencement du déchargement ou encore transfert du traitement sensible au flux de réseau à partir du processeur polyvalent jusqu'au processeur de réseau multicoeur ; et
en réponse à la réception de l'information, effectuer un traitement local sensible au flux d'un ou de plusieurs deuxièmes paquets dans le flux de réseau basé sur l'information reçue, sans acheminer le ou les deuxièmes paquets au processeur polyvalent.

14. Le procédé d'après la revendication 13, comprenant en outre le fait de :
créer, en se basant sur l'information reçue de la part du processeur polyvalent, une entrée de table de session pour le flux de réseau dans une mémoire accessible au processeur de réseau multicoeur (208).

15. Le procédé d'après la revendication 14, sachant que le processeur de réseau multicoeur effectue le traitement local sensible au flux d'un ou de plusieurs deuxièmes paquets en se basant sur l'entrée de table de session.
